(19) Europäisches Patentamt
European Patent Office
Office européen des brevets

(11) **EP 1 817 384 B1**

(12) **EUROPEAN PATENT SPECIFICATION**

(45) Date of publication and mention
of the grant of the patent:
**18.01.2012 Bulletin 2012/03**

(51) Int Cl.:
***C09D 11/00*** (2006.01)   ***C09D 11/10*** (2006.01)
***C08G 65/08*** (2006.01)   ***C08G 65/18*** (2006.01)
***C08G 65/26*** (2006.01)

(21) Application number: **05809435.0**

(22) Date of filing: **24.11.2005**

(86) International application number:
**PCT/GB2005/004513**

(87) International publication number:
**WO 2006/056781 (01.06.2006 Gazette 2006/22)**

(54) **A PRINTING INK**

DRUCKFARBE ODER -TINTE

ENCRE D'IMPRIMERIE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.11.2004 GB 0426138**

(43) Date of publication of application:
**15.08.2007 Bulletin 2007/33**

(73) Proprietor: **SERICOL LIMITED
Broadstairs,
Kent CT10 2LE (GB)**

(72) Inventors:
  • **NOUTARY, Carole,
Sericol Limited
Broadstairs,
Kent CT10 2LE (GB)**
  • **RUNACRE, Angelique Catherine J.,
Sericol Limited
Broadstairs,
Kent CT10 2LE (GB)**
  • **BROOKS, Matthew R.,
Sericol Limited
Broadstairs,
Kent CT10 2LE (GB)**

(74) Representative: **Gillard, Richard Edward
Elkington and Fife LLP
Thavies Inn House
3-4 Holborn Circus
London EC1N 2HA (GB)**

(56) References cited:
**EP-A- 1 371 695       US-A- 6 166 100
US-A1- 2004 166 253   US-B1- 6 232 361**

  • **PATENT ABSTRACTS OF JAPAN vol. 2003, no.
02, 5 February 2003 (2003-02-05) & JP 2002 317139
A (RISO KAGAKU CORP), 31 October 2002
(2002-10-31)**
  • **PATENT ABSTRACTS OF JAPAN vol. 2003, no.
02, 5 February 2003 (2003-02-05) & JP 2002 293916
A (UBE IND LTD), 9 October 2002 (2002-10-09)**
  • **PATENT ABSTRACTS OF JAPAN vol. 2000, no.
25, 12 April 2001 (2001-04-12) & JP 2001 220526
A (BROTHER IND LTD), 14 August 2001
(2001-08-14)**
  • **PATENT ABSTRACTS OF JAPAN vol. 2003, no.
08, 6 August 2003 (2003-08-06) & JP 2003 119414
A (TOYO INK MFG CO LTD), 23 April 2003
(2003-04-23)**
  • **PATENT ABSTRACTS OF JAPAN vol. 2003, no.
12, 5 December 2003 (2003-12-05) & JP 2004
091552 A (KONICA MINOLTA HOLDINGS INC), 25
March 2004 (2004-03-25)**

**Description**

This invention relates to a printing ink and in particular to an ink for use in ink-jet printing which is cured using ultraviolet radiation.

In ink-jet printing, minute droplets of black or coloured ink are ejected in a controlled manner from one or more reservoirs or printing heads through narrow nozzles on to a substrate, which is moving relative to the reservoirs. The ejected ink forms an image on the substrate. For high-speed printing, the inks must flow rapidly from the printing heads, and, to ensure that this happens, they must have a low viscosity at the jetting stage. The ink viscosity is typically 100 mPas or less at 25°C, although often the jetting nozzles are heated to above ambient temperatures, typically to about 40°C, to reduce the viscosity further. In most applications the viscosity at the jetting stage should be below 25 mPas and preferably 9 to 15 mPas. Typically, when ejected through the nozzles, the ink has a viscosity of 10.5 mPas at the jetting temperature (the ink might have a much higher viscosity at ambient temperature). The inks must also be resistant to drying or crusting in the reservoirs or nozzles. For these reasons, ink-jet inks for application at or near ambient temperatures are commonly formulated to contain a large proportion of a mobile liquid vehicle or solvent. In one common type of ink-jet ink this liquid is water - see for example the paper by Henry R. Kang in the Journal of Imaging Science, 35(3), pp. 179-188 (1991). In those systems, great effort must be made to ensure that the inks do not dry in the head due to water evaporation. In another common type of ink, the liquid is a low-boiling solvent or mixture of solvents - see, for example, EP 0 314 403 and EP 0 424 714. Unfortunately, ink-jet inks that include a large proportion of water or solvent cannot be handled after printing until the inks have dried, either by evaporation of the solvent or its absorption into the substrate. This drying process is often slow and in many cases (for example, when printing on to a heat-sensitive substrate such as paper) cannot be accelerated.

Another type of ink-jet ink contains polymerisable organic compounds, termed monomers, which polymerise by irradiation, commonly with ultraviolet (UV) light, in the presence of a photoinitiator. This type of ink has the advantage that it is not necessary to evaporate the liquid phase to dry the print; instead the print is exposed to radiation to cure or harden it, a process that is more rapid than evaporation of solvent at moderate temperatures.

There are two main technologies that can be used in a UV curing process. The first method uses free radical species to initiate the polymerisation of reactive monomers. These monomers may be acrylate or methacrylate esters, as is disclosed in WO 97/31071. In such ink-jet inks it is necessary to use monomers possessing a low viscosity. In practice it is difficult to find (meth)acrylate monomers or combinations of (meth)acrylate monomers that produce inks with a sufficiently low viscosity for ink-jet printing, whilst displaying good reactivity and end-user properties, such as good adhesion, flexibility and chemical resistance. A number of methodologies have been proposed to optimise the reactivity and mechanical properties of the ink, whilst reducing the viscosity of the system. For example, GB 2371 551 describes the use of vinyl ethers as a reactive diluent in UV-curable radically polymerisable ink.

One limitation of radical-curing (meth)acrylate based systems for ink-jet printing is the flexibility of the cured ink. This is generally linked to the shrinkage associated with acrylate materials after curing that renders the ink film brittle and not suitable for applications where high flexibility is required. This is particularly an issue for UV-curable ink-jet inks where the very low viscosity requirements make the use of flexible passive resins very limited.

Another method used in UV curing technology is the generation of very strong acids to initiate the cationic polymerisation of reactive monomers. Monomers that can be used in cationic curing are, for example, epoxides, allyl ethers and vinyl ethers.

The benefits of cationic curing over radical curing include low shrinkage and therefore good adhesion and excellent flexibility. Furthermore, cationic systems are not sensitive towards oxygen inhibition, which makes substantially complete (at or about 100%) monomer conversion possible. This means that cationic technology allows the curing of thick pigmented ink films more easily than free radical technology.

Cationically curable ink-jet inks have been reported. For example, JP 10-324836 describes dye-based ink-jet inks although the inks possess a very limited durability. The inks described also present the drawback of containing volatile organic solvents. US 5,889,084 describes cationic ink-jet inks free of organic solvents, and containing epoxide and vinyl ether monomers. However, although vinyl ethers are very effective at reducing the viscosity of ink-jet systems, we found that they hydrolyse easily in the presence of acids generated by the cationic polymerisation process, generating a very strong and unpleasant odour. Their use is therefore extremely limited.

Furthermore, mention should be made of the following documents.

US 2004/166253 relates to a radiation curable ink-jet ink comprising an epoxy compound containing and alicyclic epoxy group and an epoxyfied fatty acid ester group. The ink is intended to provide beneficial curing properties in a high humidity environment.

EP 1 371 695 discloses a curable resin composition suitable for ink-jet printing. The ink comprises: at least one low viscosity reactive resin, e.g. an oxetane, a cycloaliphatic epoxy or a furane; at least one higher viscosity resin, e.g. a fast-reacting epoxy resin; at least one photoinitiator; and at least one stabiliser. The intention is to provide a rapid cure whilst avoiding brittleness and shrinkage.

US 6,232,361 provides an actinic radiation curable cationic ink and coating composition which has greatly enhanced reactivity, a reduced viscosity and are low in odour. The composition comprises an aqueous solution containing a cationic polymerisable compound, such as a cycloaliphatic epoxy compound, a water-compatible hydroxy-functional cyclic ether, particularly an epoxy or oxetane compound, and water.

US 6,166,100 discloses a cationically polymerisable pigmented composition comprising (A) a cationically polymerisable binder component containing at least one resin or compound selected from the group consisting of (A-1) a cationically polymerisable acrylic resin consisting of a copolymer of (a) a (meth)acrylic ester monomer having $C_{6-31}$ aliphatic hydrocarbon group, (b) a polymerisable unsaturated monomer containing a polymerisable unsaturated group and at least one cationically polymerisable moiety selected from an epoxy group and an oxetane ring, and optionally (c) other polymerisable unsaturated monomers, and (A-2) a fatty acid-modified epoxy compound containing $C_{6-32}$ aliphatic hydrocarbon group and epoxy group, (B) a cationic polymerisation initiator initiating polymerisation by irradiation or heating, and (C) a colour pigment.

JP 2002-317139 relates to a cationically polymerisable radiation-curable ink which has excellent curing properties in very humid environments the ink contains (A) an alicyclic epoxy resin and an oxetane compound, (B) a cationic polymerisation initiator and (C) colorant.

JP 2002-293916 relates to a UV curable composition which has an improved tack and adhesion on various substrates. The composition includes (A) an oxetane ring-containing non-acrylic compound, (B) a siloxane bond-containing (meth)acrylic acid ester or polymer thereof, (C) an oxirane ring-containing non-acrylic compound, (D) a polyol compound and (E) a photo-polymerisation initiator.

JP 2001-220526 relates to a radiation-curable ink-jet ink comprising specified amounts of (1) a cationic photopolymerisation initiator, (2) a compound having at least one oxirane group, (3) a vinyl ether compound, and (4) an oxetane compound having hydroxy group.

JP 2003-119414 provides a low-viscosity radiation-curable ink-jet ink which exhibits a high rate of photopolymerisation, is highly curable into a thick film, has good thermal stability, has good jetting stability at the nozzle, adheres to printing media, and displays solvent and water resistance. The ink is a solventless ink and comprises a pigment having a mean particle size of 10-150 nm, an oxirane group-containing compound and a di[1- lower alkyl(3-oxetanyl)] lower alkyl ether and optionally, vinyl ether, a pigment dispersant which is a pigment derivative, and a photocationic polymerisation initiator.

JP 2004-091552 and US 2004/050292 describe a photocurable ink for ink-jet recording, comprising an oxetane compound having a substituent at the 2-position of the molecule. The ink further may further comprise a compound selected from: (i) mono-oxetane ring containing compounds; (ii) epoxy compounds; and (iii) vinyl ether compounds.

There remains, therefore, a need for radiation-curable (primarily UV-curable) inks which have a sufficiently low viscosity for ink-jet printing and provide flexibility when cured whilst maintaining a good cure speed and chemical resistance.

Accordingly, the present invention provides an ink-jet ink having a viscosity of less than 100 mPas at 25°C and which is substantially free of water and non-reactive volatile organic solvents, comprising

> 20 to 70% by weight of at least one epoxy functional monomer,
> 2 to 70% by weight of at least one oxetane functional monomer,
> 0.5 to 40% by weight of at least one non-photopolymerisable hydroxy-containing compound,
> 0 to 40% by weight of at least one allyl and/or vinyl ether monomer,
> at least one cationic photoinitiator, and
> at least one colouring agent,

wherein the ratio of the combined amounts of epoxide groups and oxetane groups to the hydroxy-groups in the ink ((E+O):H) is from 3:1 to 35:1.

It has thus been found that using precise amounts of an epoxide, oxetane and alcohol in an ink-jet ink formulation is a very effective way of balancing the properties of the ink, namely controlling the viscosity of cationic UV ink-jet inks thereby eliminating the need to use vinyl ethers as main diluents, whilst also increasing the flexibility of the cured ink without impeding cure speed.

The ink of the present invention contains at least one or more epoxides, oxetanes and alcohols. All percentages by weight are based on the total weight of the ink composition (prior to curing).

One or more epoxide functional monomers must be present in the composition of the present invention as reactive monomers. By epoxide functional monomer is meant a compound containing an epoxide moiety. Preferably, multifunctional and most preferably difunctional epoxides are used. Examples include 3,4-epoxycyclohexylmethyl carboxylate, 3,4-epoxycyclohexane carboxylate and bis-(3,4-epoxycyclohexyl) Adipate. The ink includes from 20 to 70% by weight, preferably 25 to 50% by weight, most preferably 30 to 40% by weight, of the one or more epoxides.

Although the epoxides possess good curing properties, they tend to have a high viscosity requiring the presence of further diluents to reduce the viscosity of the ink, hence the requirement for the oxetanes, alcohols and optionally allyl and/or vinyl ethers. Typically, the epoxides have a viscosity of up to 800 mPas at 25°C, preferably 400 mPas at 25°C. UVR6105, used in the examples, has a viscosity of 288 mPas at 25°C

One or more oxetane functional monomers are also present in the ink composition. By oxetane functional monomer is meant a compound containing an oxetane moiety. Preferably, multifunctional and most preferably difunctional oxetanes are used. Examples include bis [1-ethyl(3-oxetanil)] methyl ether oxetane (DKSH) and 3-ethyl-3-hydroxy-methyl-oxetane. The ink includes from 2 to 70% by weight, preferably from 20 to 50% by weight of the one or more oxetanes. The one or more oxetanes, when combined, preferably have a viscosity of no more than 20 mPas at 25°C, and most preferably no more than 15 mPas at 25°C. The minimum viscosity is determined by availability and cost of materials and may be any non-zero value.

One or more hydroxy-containing compounds are present in the ink. Both monofunctional and/or multifunctional alcohols may be used. When used as diluent, low molecular weight low viscosity alcohols are preferable. The ink includes from 0.5 to 40% by weight, preferably from 0.5 to 30% by weight, and most preferably 1 to 25% by weight, of the one or more hydroxy containing compounds. The one or more hydroxy-containing compounds preferably have a viscosity of 1 to 1500 mPas at 25°C. Dowanol TPM and Tone 0305 used in the examples have viscosities of 1.7 and 1200 mPas at 25°C, respectively.

Without wishing to be bound by theory, it is believed that the one or more hydroxy-containing compounds become part of the cross-linked cured ink film via chain transfer reactions with the growing polymer reactive species, and thereby allow increasing the film flexibility without any reduction in the mechanical or chemical resistance of the print. The one or more hydroxy-containing compounds are capable of incorporation into the cured polymer but are themselves non-photopolymerisable and are chain terminators for the growing polymer reactive species.

The ratio of the combined amounts of epoxide groups and oxetane groups to the hydroxy-groups in the ink (termed "(E+O):H") is from 3:1 to 35:1, preferably from 3:1 to 10:1. The amount of the epoxide groups in the ink is calculated as follows:

$$\text{Amount of epoxide groups} = (\% \text{ by weight of epoxide in the ink})/(\text{number of epoxide equivalents}), \text{ and}$$

$$\text{number of epoxide equivalents} = (\text{molecular weight of the epoxide})/\text{functionality}.$$

The functionality is simply the number of reactive groups per molecule. The oxetane and hydroxy equivalents may be calculated in an analogous manner. Where more than one component of each type is present, or impurities are present, the molecular weight and functionality are given as a mean value.

Examples of alcohols that can be used include ethanol, propanol, (poly)ethylene glycols, butanol, isobutanol, 2-ethyl hexanol, dipropylene glycol monomethyl ether (e.g. as supplied by Dow under the trade name Dowanol DPM), tripropylene glycol monomethyl ether (supplied by Dow under the trade name Dowanol TPM), polyols (e.g. Tone 0201, 0301, 0305 and 0310 supplied by Dow and Capa 3050 supplied by Solvay), partially alkoxylated polyols, such as neopentyl glycol propoxylate (supplied by Perstorp under the trade name of Polyol NS20), pentaerythritol ethoxylates (supplied by Perstorp under the trade name of Polyol PP150), pentaerythritol propoxylates (supplied by Perstorp under the trade name of Polyol PS85), trimethylolpropane ethoxylates (supplied by Perstorp under the trade name of Polyol TP30), trimethylopropane propoxylates (supplied by Perstorp under the trade name of Polyol TS30), polycarbonate polyols (supplied by Lambson under the trade name of UviCure RCP 1000, 1800, 2000), polyester polyols (supplied by Bayer under the trade name of Desmophen, and Witco under the trade name of Fomrez) and dendritic polyester polyols (supplied by Perstorp under the trade name of Boltorn H2003 and H2004).

One or more allyl or vinyl ether monomers may be present in the composition of the present invention. Examples are triethylene glycol divinyl ether, diethylene glycol divinyl ether, 1,4-cyclohexanedimethanol divinyl ether and ethylene glycol monovinyl ether. Mixtures of allyl or vinyl ethers may be used. The proportion of allyl or vinyl ethers is from 0 to 40% by weight, preferably from 1 to 40% by weight, more preferably from 1 to 15% by weight, most preferably from 1 to 5% by weight. Preferably, vinyl ethers are used and particularly preferably the vinyl ether is selected from triethylene glycol divinyl ether, diethylene glycol divinyl ether, 1,4-cyclohexanedimethanol divinyl ether, ethylene glycol monovinyl ether and mixtures thereof.

When present, the ratio of the total amount by weight of the one or more allyl or vinyl ether monomers to the total amount by weight of the one or more oxetanes is preferably from 1:50 to 1:1, more preferably from 1:30 to 1:5.

In addition to the components described above, the ink formulation of the present invention includes a photoinitiator which, under irradiation (e.g. UV irradiation), initiates the polymerisation of the monomers. Photoinitiators that produce acids under UV irradiation (cationic photoinitiators) are preferably used. Cationic photoinitiators include sulfonium salts, such as Union Carbide UVI-69-series, iodonium salts, such as Deuteron UV 1240 and UV2257, Ciba Irgacure 250 and CGI 552, IGM-C440, Rhodia 2047 and UV9380c, and ferrocinium salts. Photosensitisers may also be used with the sulfonium and iodonium salts to accelerate the curing reaction. Photosensitisers which may be used include thioxantone and anthracene derivatives.

Preferably the photoinitiator is present from 1 to 20% by weight, preferably from 5 to 15% by weight.

The ink-jet ink of the present invention also includes a colouring agent, which may be either dissolved or dispersed in the liquid medium of the ink. Preferably the colouring agent is a dispersible pigment, of the types known in the art and commercially available, for example under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used. The total proportion of pigment present is preferably from 0.5 to 15% by weight, more preferably from 1 to 5% by weight.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and/or identifying tracers.

The ink of the present invention is substantially free of non-reactive volatile organic solvents. By substantially free is meant that the ink is a curable ink and hence does not rely on the evaporation of the organic solvent for the drying mechanism. By non-reactive is meant that the solvent does not react with any of the other components of the ink. The ink is substantially free of water. Accordingly, the ink is substantially free of both water and volatile organic solvents. By substantially free of water is meant that the ink is a curable ink and hence does not rely on the evaporation of water for the drying mechanism. Minor quantities of organic solvent/water (as applicable) may however be tolerated.

A particularly preferred ink of the present invention comprises: 30 to 40% by weight of at least one epoxy functional monomer, 30 to 40% by weight of at least one oxetane functional monomer, 1 to 20% by weight of at least one hydroxy-containing compound, 1 to 5% by weight of at least one allyl and/or vinyl ether monomer, 1 to 20% by weight at least one cationic photoinitiator, and 5 to 15% by weight of at least one colouring agent, the ink.

The ink of the present invention is preferably cured by UV irradiation and is suitable for application by ink-jet printing. Accordingly, the present invention also provides a method of ink-jet printing comprising printing the above-described ink-jet ink on to a substrate, preferably a flexible substrate, and irradiating the ink.

The inks of the present invention may be prepared by known methods such as mixing the components under stirring using a high-speed water-cooled stirrer, or milling on a horizontal bead-mill.

Examples

The invention will now be described, by way of example, with reference to the following non-limiting examples (parts given are by weight). These inks use combinations of oxetane compound, epoxy monomer and varying levels of hydroxy-containing compounds. The formulations are described in Tables 1 and 2. Example 1 is a comparative example and examples 2-19 are examples of the present invention.

**Table 1. Ink formulations for Examples 1-10**

| Example. | 1 | 2 | 3 | 4 | 5 | 6 | 7 | 8 | 9 | 10 |
|---|---|---|---|---|---|---|---|---|---|---|
| **Iragalite Blue GLVO** | 1.3 | 1.3 | 1.3 | 1.3 | 1.3 | 1.3 | 1.3 | 1.3 | 1.3 | 1.3 |
| **Rapicure DVE3** | 2.0 | 2.0 | 2.0 | 2.0 | 2.0 | 2.0 | 2.0 | 2.0 | 2.0 | 2.0 |
| **Disperbyk 168** | 0.9 | 0.9 | 0.9 | 0.9 | 0.9 | 0.9 | 0.9 | 0.9 | 0.9 | 0.9 |
| **UVR6105** | 35.7 | 35.7 | 35.7 | 35.7 | 35.7 | 35.7 | 35.7 | 35.7 | 35.7 | 35.7 |
| **OX221** | 50.0 | 29.0 | 35.0 | 45.0 | 31.1 | 36.6 | 45.6 | 38.6 | 42.1 | 47.5 |
| **Dowanol TPM** | - | 21.0 | 15.0 | 5.0 | - | - | - | - | - | - |
| **Tone 0305** | - | - | - | - | 18.9 | 13.4 | 4.40 | - | - | - |
| **Tone 0301** | - | - | - | - | - | - | - | 11.4 | 7.9 | 2.5 |
| **Ethylene Glycol** | - | - | - | - | - | - | - | - | - | - |
| **Dowanol DPM** | - | - | - | - | - | - | - | - | - | - |
| **n-butanol** | - | - | - | - | - | - | - | - | - | - |
| **UV16992** | 10.0 | 10.0 | 10.0 | 10.0 | 0.0 | 10.0 | 10.0 | 10.0 | 10.0 | 10.0 |
| **Byk 307** | 0.1 | 0.1 | 0.1 | 0.1 | 0.1 | 0.1 | 0.1 | 0.1 | 0.1 | 0.1 |

**Table 2. Ink formulations for Examples 11-19**

| Example | 11 | 12 | 13 | 14 | 15 | 16 | 17 | 18 | 19 |
|---|---|---|---|---|---|---|---|---|---|
| **Iragalite Blue GLVO** | 1.3 | 1.3 | 1.3 | 1.3 | 1.3 | 1.3 | 1.3 | 1.3 | 1.3 |
| **Rapicure DVE3** | 2.0 | 2.0 | 2.0 | 2.0 | 2.0 | 2.0 | 2.0 | 2.0 | 2.0 |
| **Disperbyk 168** | 0.9 | 0.9 | 0.9 | 0.9 | 0.9 | 0.9 | 0.9 | 0.9 | 0.9 |
| **UVR6105** | 35.7 | 35.7 | 35.7 | 35.7 | 35.7 | 35.7 | 35.7 | 35.7 | 35.7 |
| **OX221** | 46.2 | 47.4 | 49.2 | 33.9 | 38.8 | 46.4 | 40.9 | 43.9 | 48.1 |
| **Dowanol TPM** | - | - | - | - | - | - | - | - | - |
| **Tone 0305** | - | - | - | - | - | - | - | - | - |
| **Tone 0301** | - | | - | - | - | - | - | - | - |
| **Ethylene Glycol** | 3.8 | 2.6 | 0.8 | - | - | - | - | - | - |
| **Dowanol DPM** | - | - | - | 16.1 | 11.3 | 3.6 | - | - | - |
| **n-butanol** | - | - | - | - | - | - | 9.1 | 6.1 | 1.9 |
| **UVI6992** | 10.0 | 10.0 | 0.0 | 10.0 | 10.0 | 10.0 | 10.0 | 10.0 | 10.0 |
| **Byk 307** | 0.1 | 0.1 | 0.1 | 0.1 | 0.1 | 0.1 | 0.1 | 0.1 | 0.1 |

Irgalite Blue GLVO - cyan pigment (Ciba)
Rapicure DVE3 - vinyl ether (ISP)
Disperbyk 168 - pigment dispersant (Byk Chemie)
UVR6105 - cycloaliphatic epoxide (Dow)
UVI6992 - sulfonium salt (Dow)
OX221 - bis [1-ethyl(3-oxetanil)] methyl ether oxetane (DKSH)
Dowanol TPM - tripropylene glycol monomethyl ether (Dow)
Dowanol DPM - dipropylene glycol monomethyl ether (Dow)
Ethylene glycol - (Albion Chemicals)
n-butanol - (Albion Chemicals)
Boltorn H2004 - dendritic polymer (Dow)
Tone 0301 -multifunctional polyol (Dow)
Tone 0305 -multifunctional polyol (Dow)
Byk 307 - polyether modified poly-dimethyl-siloxane surfactant (Byk Chemie)

The resultant ink compositions from examples 1-19 were evaluated for viscosity using a Brookfield DVI viscometer with ULA adapter and spindle 00 at 25°C. The results are described in Table 3.

The flexibility of the inks was assessed using an Instron 5544 elongation tester. A 12 micron film of ink examples 1-19 was produced onto Avery and Scotchcal 225 self-adhesive white vinyl (3M) using an automatic K-bar coater and wire wound applicator bar. The ink film was cured using a 120 W/cm medium pressure mercury lamp at a linear speed of 40 m/min. All inks demonstrated good cure and adhesion.

A sample piece of the resultant cured coating was cut to 25 mm x 50 mm, placed in the Instron and subjected to increasing force until the sample ruptured. Elongation was calculated as the distance in millimetres moved by the sample from the point at which force was first applied to the point at which the sample broke. The test was repeated ten times for each example, and the average elongation value was recorded for each ink formulation. The results are also described in Table 3.

The degree of cure and chemical resistance of the cured ink films was assessed by determining resistance to methyl ethyl ketone (MEK). A cotton bud soaked in MEK was rubbed backwards and forwards on an area of the cured print. The number of rubs before a break in the surface of the film was observed was recorded. A maximum of 100 rubs was carried out as this is indicative of an excellent degree of cure and resistance. The results are also described in Table 3.

**Table 3. Properties of the ink formulations.**

| Example | (E+O):H | Viscosity at 25°C (mPas) | Elongation (mm) | MEK Rubs |
|---|---|---|---|---|
| 1 | Infinity | 35.6 | 6.7 | >100 |
| 2 | 5.4 | 23.1 | 23.6 | 86 |
| 3 | 8.3 | 28.6 | 17.3 | >100 |

(continued)

| Example | (E+O):H | Viscosity at 25°C (mPas) | Elongation (mm) | MEK Rubs |
|---|---|---|---|---|
| 4 | 28.6 | 28.6 | 10.3 | >100 |
| 5 | 5.4 | 91.7 | 20.3 | >100 |
| 6 | 8.3 | 67.5 | 17.2 | 79 |
| 7 | 28.6 | 41.2 | 11.4 | >100 |
| 8 | 5.4 | 63.7 | 18.2 | >100 |
| 9 | 8.3 | 52.5 | 14.4 | >100 |
| 10 | 28.6 | 38.1 | 9.7 | >100 |
| 11 | 5.4 | 34.0 | 15.2 | >100 |
| 12 | 8.3 | 34.8 | 12.6 | >100 |
| 13 | 28.6 | 34.5 | 10.4 | >100 |
| 14 | 5.4 | 22.3 | 21.4 | >100 |
| 15 | 8.3 | 25.0 | 17.8 | >100 |
| 16 | 28.6 | 31.3 | 10.5 | >100 |
| 17 | 5.4 | 19.0 | 12.8 | >100 |
| 18 | 8.3 | 23.3 | 14.0 | >100 |
| 19 | 28.6 | 29.3 | 7.0 | >100 |

The (E+O):H value represents the ratio of the combined total weights of the epoxide and the oxetane to the hydroxy-containing in the ink. The ratio of Epoxide + Oxetane to Hydroxy [(E+O):H] may be determined as follows, as exemplified by Example 3.

Epoxide UVR6105:

Epoxide equivalent is 130 (On account of impurities the molecular weight is just over 252, the functionality is 2)
% by weight in ink is 35.7%
Therefore, the number of equivalents in ink = 35.7/130 = 0.276

Oxetane Ox 221:

Oxetane equivalent is 107 (Molecular weight is 214 and functionality is 2)
% by weight in ink is 35%
Therefore, the number of equivalents in ink = 35/107 = 0.327

Hydroxy-containing compound Dowanol TPM:

Hydroxy equivalent is 206 (Molecular weight is 206 and functionality is 1)
% by weight in ink is 15%
Therefore, the number of equivalents in ink =15/206 = 0.073

Thus, the ratio Epoxide + Oxetane to Hydroxy = (0.276+0.327)/0.073 = 8.3
Example 1 contains no hydroxy material and accordingly has an (E+O):H value of infinity. This example demonstrated very little flexibility when subjected to the Instron test. Examples 2-19 all contain varying levels of hydroxy materials and show increased flexibility compared to Example 1. The highest the amount of the same alcohol gave the greatest extension, and therefore optimum flexibility. Furthermore, excellent cure and resulting film resistance was maintained while using hydroxy functional materials.

**Claims**

1. An ink-jet ink having a viscosity of less than 100 mPas at 25°C comprising 20 to 70% by weight of at least one epoxy functional monomer,

    2 to 70% by weight of at least one oxetane functional monomer,
    0.5 to 40% by weight of at least one hydroxy-containing compound,
    0 to 40% by weight of at least one allyl and/or vinyl ether monomer,

    at least one cationic photoinitiator, and
    at least one colouring agent, the ink.

2. An ink-jet ink as claimed in claim 1, wherein the at least one epoxy functional monomer is present at 25 to 50% by weight.

3. An ink-jet ink as claimed in claim 1 or 2, wherein the at least one oxetane functional monomer is present at 20 to 50% by weight.

4. An ink-jet ink as claimed in any preceding claim, wherein the at least one hydroxy-containing compound is present at 0.5 to 30% by weight.

5. An ink-jet ink as claimed in any preceding claim, wherein the at least one allyl and/or vinyl ether is present at 1 to 15% by weight.

6. An ink-jet ink as claimed in any preceding claim, wherein the ratio of the combined amounts of epoxide groups and oxetane groups to the hydroxy-groups in the ink ((E+O):H) is from 1:1 to 35:1.

7. An ink-jet ink as claimed in any preceding claim, wherein at least one allyl and/or vinyl ether monomer is present and the ratio of the total amount by weight of the one or more allyl and/or vinyl ether monomers to the total amount by weight of the one or more oxetanes is from 1:50 to 1:2.

8. An ink-jet ink as claimed in any preceding claim, wherein the at least one epoxy functional monomer includes a difunctional epoxide.

9. An ink-jet ink as claimed in any preceding claim, wherein the at least one oxetane functional monomer includes a difunctional oxetane.

10. An ink-jet ink as claimed in any preceding claim, wherein the overall viscosity of the hydroxy-containing compounds is 1 to 1500 mPas at 25°C.

11. An ink-jet ink as claimed in any preceding claim, wherein the ink comprises:

    30 to 40% by weight of at least one epoxy functional monomer,
    30 to 40% by weight of at least one oxetane functional monomer,
    1 to 20% by weight of at least one hydroxy-containing compound,
    1 to 5% by weight of at least one allyl and/or vinyl ether monomer,
    1 to 20% by weight at least one cationic photoinitiator, and
    1 to 5% by weight of at least one colouring agent, the ink.

12. A method for ink-jet printing comprising printing the ink-jet ink as claimed in any preceding claim on to a substrate and irradiating the ink.

13. A method as claimed in claim 12, wherein the substrate is a flexible substrate.

**Patentansprüche**

1.  Tintenstrahltinte mit einer Viskosität von weniger als 100 mPas bei 25 °C, umfassend:

    20 bis 70 Gew.-% mindestens eines epoxidfunktionellen Monomers,
    2 bis 70 Gew.-% mindestens eines oxetanfunktionellen Monomers,
    0,5 bis 40 Gew.-% mindestens einer Hydroxyverbindung,
    0 bis 40 Gew.-% mindestens eines Allyl- und/oder Vinylether-Monomers,
    mindestens einen kationischen Photoinitiator und
    mindestens einen Farbstoff, die Tinte.

2.  Tintenstrahltinte nach Anspruch 1, wobei der Anteil des mindestens einen epoxidfunktionellen Monomers 25 bis 50 Gew.-% beträgt.

3.  Tintenstrahltinte nach Anspruch 1 oder 2, wobei der Anteil des mindestens einen oxetanfunktionellen Monomers 20 bis 50 Gew.-% beträgt.

4.  Tintenstrahltinte nach einem vorangehenden Anspruch, wobei der Anteil der mindestens einen Hydroxyverbindung 0,5 bis 30 Gew.-% beträgt.

5.  Tintenstrahltinte nach einem vorangehenden Anspruch, wobei der Anteil des mindestens einen Allyls und/oder Vinylethers 1 bis 15 Gew.-% beträgt.

6.  Tintenstrahltinte nach einem vorangehenden Anspruch, wobei das Verhältnis der kombinierten Mengen von Epoxidgruppen und Oxetangruppen zu den Hydroxylgruppen in der Tinte, ((E+O):H), im Bereich von 1:1 bis 35:1 liegt.

7.  Tintenstrahltinte nach einem vorangehenden Anspruch, wobei mindestens ein Allyl-und/oder Vinylether-Monomer vorhanden ist und das Verhältnis der Gesamtgewichtsmenge des einen oder der mehreren Allyl- und/oder Vinylether-Monomere zur Gesamtgewichtsmenge des einen oder der mehreren Oxetane im Bereich von 1:50 bis 1:2 liegt.

8.  Tintenstrahltinte nach einem vorangehenden Anspruch, wobei das mindestens eine epoxidfunktionelle Monomer ein bifunktionelles Epoxid einschließt.

9.  Tintenstrahltinte nach einem vorangehenden Anspruch, wobei das mindestens eine oxetanfunktionelle Monomer bifunktionelles Oxetan einschließt.

10. Tintenstrahltinte nach einem vorangehenden Anspruch, wobei die Gesamtviskosität der Hydroxyverbindungen bei 25 °C 1 bis 1500 mPas beträgt.

11. Tintenstrahltinte nach einem vorangehenden Anspruch, wobei die Tinte umfasst:

    30 bis 40 Gew.-% mindestens eines epoxidfunktionellen Monomers,
    30 bis 40 Gew.-% mindestens eines oxetanfunktionellen Monomers,
    1 bis 20 Gew.-% mindestens einer Hydroxyverbindung,
    1 bis 5 Gew.-% mindestens eines Allyl- und/oder Vinylether-Monomers,
    1 bis 20 Gew.-% mindestens eines kationischen Photoinitiators und
    1 bis 5 Gew.-% mindestens eines Farbstoffs, der Tinte.

12. Verfahren zum Tintenstrahldrucken, welches das Drucken der Tintenstrahltinte nach einem vorangehenden Anspruch auf ein Substrat und das Verteilen der Tinte umfasst.

13. Verfahren nach Anspruch 12, wobei das Substrat ein flexibles Substrat ist.

**Revendications**

1.  Encre pour jet d'encre ayant une viscosité inférieure à 100 mPas à 25 °C comprenant
    de 20 à 70 % en poids d'au moins un monomère époxy fonctionnel,

de 2 à 70 % en poids d'au moins un monomère oxétane fonctionnel,
de 0,5 à 40% en poids d'au moins un composé à groupement hydroxyle,
de 0 à 40% en poids d'au moins un monomère d'éther d'allyle et/ou de vinyle,
au moins un photoinitiateur cationique, et
au moins un agent colorant, l'encre.

2. Encre pour jet d'encre selon la revendication 1, dans laquelle l'au moins un monomère époxy fonctionnel est présent à 25 à 50 % en poids.

3. Encre pour jet d'encre selon la revendication 1 ou 2, dans laquelle l'au moins un monomère oxétane fonctionnel est présent à 20 à 50 % en poids.

4. Encre pour jet d'encre selon l'une quelconque des revendications précédentes, dans laquelle l'au moins un composé à groupement hydroxyle est présent à 0,5 à 30% en poids.

5. Encre pour jet d'encre selon l'une quelconque des revendications précédentes, dans laquelle l'au moins un éther d'allyle et/ou de vinyle est présent à 1 à 15 % en poids.

6. Encre pour jet d'encre selon l'une quelconque des revendications précédentes, dans laquelle le rapport des quantités combinées des groupes époxy et des groupes oxétane sur les groupes hydroxyle dans l'encre ((E+0):H) se situe entre 1:1 et 35:1.

7. Encre pour jet d'encre selon l'une quelconque des revendications précédentes, dans laquelle au moins un monomère d'éther d'allyle et/ou de vinyle est présent, et le rapport de la quantité totale en poids des un ou plusieurs monomères d'éther d'allyle et/ou de vinyle sur la quantité totale en poids des un ou plusieurs oxétanes se situe entre 1:50 et 1:2.

8. Encre pour jet d'encre selon l'une quelconque des revendications précédentes, dans laquelle l'au moins un monomère époxy fonctionnel comprend un époxyde difonctionnel.

9. Encre pour jet d'encre selon l'une quelconque des revendications précédentes, dans laquelle l'au moins un monomère oxétane fonctionnel comprend un oxétane difonctionnel.

10. Encre pour jet d'encre selon l'une quelconque des revendications précédentes, dans laquelle la viscosité globale des composés à groupement hydroxyle est comprise entre 1 et 1500 mPas à 25 °C.

11. Encre pour jet d'encre selon l'une quelconque des revendications précédentes, l'encre comprenant :

de 30 à 40% en poids d'au moins un monomère époxy fonctionnel,
de 30 à 40% en poids d'au moins un monomère oxétane fonctionnel,
de 1 à 20 % en poids d'au moins un composé à groupement hydroxyle,
de 1 à 5% en poids d'au moins un monomère d'éther d'allyle et/ou de vinyle,
de 1 à 20 % en poids d'au moins un photoinitiateur cationique, et
de 1 à 5 % en poids d'au moins un agent colorant, l'encre.

12. Procédé pour impression par jet d'encre comprenant l'impression de l'encre pour jet d'encre selon l'une quelconque des revendications précédentes sur un substrat et l'irradiation de l'encre.

13. Procédé selon la revendication 12, dans lequel le substrat est un substrat flexible.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0314403 A
- EP 0424714 A
- WO 9731071 A
- GB 2371551 A
- JP 10324836 A
- US 5889084 A
- US 2004166253 A
- EP 1371695 A
- US 6232361 B
- US 6166100 A
- JP 2002317139 A
- JP 2002293916 A
- JP 2001220526 A
- JP 2003119414 A
- JP 2004091552 A
- US 2004050292 A

**Non-patent literature cited in the description**

- **HENRY R. KANG.** *Journal of Imaging Science,* 1991, vol. 35 (3), 179-188